# EUROPÄISCHE PATENTSCHRIFT

(11) **EP 1 675 887 B1**
(45) Veröffentlichungstag und Bekanntmachung des Hinweises auf die Patenterteilung: **09.03.2011**
(21) Anmeldenummer: 04765889.3
(22) Anmeldetag: 08.10.2004
(51) Int. Cl.: C08G 83/00, C08G 63/91, C08G 63/20

(54) **HYPERVERZWEIGTE POLYESTER MIT ETHYLENISCH UNGESÄTTIGTEN GRUPPEN**
HYPERBRANCHED POLYMERS HAVING ETHYLENICALLY UNSATURATED GROUPS
POLYESTERS HYPER RAMIFIES CONTENANT DES GROUPES ETHYLENIQUEMENT INSATURES

(30) Priorität: 14.10.2003 DE 10348463
(43) Veröffentlichungstag der Anmeldung: 05.07.2006
(73) Patentinhaber: BASF SE, 67056 Ludwigshafen (DE)
(72) Erfinder: STUMBE, Jean-Francois, F-67200 Strasbourg (FR); BRUCHMANN, Bernd, 67251 Freinsheim (DE); HÄRING, Dietmar, 69198 Schriesheim (DE); HEISCHKEL, Yvonne, 68199 Mannheim (DE)
(86) Internationale Anmeldenummer: PCT/EP2004/011254
(87) Internationale Veröffentlichungsnummer: WO 2005/037893

(56) Entgegenhaltungen:
- EP-A- 1 338 610
- WO-A-00/59982
- WO-A-00/77070
- WO-A-96/13558
- WO-A-97/49781
- US-A- 5 183 862
- US-A- 5 834 118

## Beschreibung

Die vorliegende Erfindung betrifft hyperverzweigte Polyester mit ethylenisch ungesättigten Gruppen, erhältlich durch Umsetzung von
(c) mindestens einer Verbindung mit mindestens einer ethylenischen Doppelbindung mit mindestens einem hyperverzweigten Polyester, der erhältlich ist durch Kondensation von
(a) mindestens einer Dicarbonsäure oder mindestens eines Derivats derselben mit mindestens einem mindestens trifunktionellen Alkohol
   oder
(b) mindestens einer Tricarbonsäure oder höheren Polycarbonsäure oder mindestens einen Derivat derselben mit mindestens einem Diol.

Weiterhin betrifft die vorliegende Erfindung ein Verfahren zur Herstellung von hyperverzweigten Polyestern mit ungesättigten Gruppen und die Verwendung der so erhaltenen hyperverzweigten Polyester mit ungesättigten Gruppen als Bindemittel, z. B. in strahlungshärtbaren Massen wie beispielsweise in Beschichtungen, Lacken und Lacksystemen, Überzügen und Klebstoffen sowie Druckfarben.

Modifizierte hochfunktionelle hyperverzweigte Polyester und Dendrimere auf Polyesterbasis sind als solche bekannt, siehe beispielsweise WO 96/19537, und werden bereits in einigen Anwendungen gebraucht, so beispielsweise als Schlagzähmodifikator. Dendrimere sind jedoch für viele Anwendungen zu teuer, weil die Synthesen hohe Anforderungen an Ausbeuten der Aufbaureaktionen und Reinheit der Zwischen- und Endprodukte stellen und für den großtechnischen Gebrauch zu teure Reagenzien erfordern.

WO 93/17060 offenbart ein Verfahren zur Herstellung von dendrimeren Polyestern. Ein Polyol als Startermolekül, beispielsweise Trimethylolpropan, wird mit Dimethylolpropionsäure in einer solchen Menge umgesetzt, dass ein Dendrimerder 1. Generation entsteht. Dendrimere höherer Generationen entstehen durch schrittweise Zugabe von Dimethylolpropionsäure. Der erhaltene Polyester kann anschließend weiter funktionalisiert werden. Das offenbarte Verfahren ist sehr umständlich und erlaubt wenig Flexibilität.

In WO 00/64975 wird der streng dendrimere Polyester Boltorn® H20 mit Acrylsäure und einem polyfunktionellen Alkohol mit einem Molekulargewicht von maximal 2000 g/mol umgesetzt und in Lackformulierungen verwendet.

In WO 00/59982 wird die Umsetzung von als hyperverzweigt bezeichneten Polyestern mit beispielsweise Glycidylmethacrylat beschrieben (siehe S. 9). Der Beschreibung ist jedoch zu entnehmen, dass unter hyperverzweigten Polyestern im Sinne von WO 00/59982 dendrimer aufgebaute Oligomere der ersten Generation zu verstehen sind (Seite 1, Zeile 31 ff.).

Die Synthese von dendrimeren Polyestern ist, wie oben beschrieben, umständlich und wenig flexibel. Auch lassen sich die Anwendungseigenschaften der modifizierten Dendrimere in vielen Fällen noch verbessern.

Es bestand daher die Aufgabe, neue Polyester mit ungesättigten Gruppen bereit zu stellen. Es bestand weiterhin die Aufgabe, ein Verfahren zur Herstellung von Polyestern mit ungesättigten Gruppen bereit zu stellen, das die aus dem Stand der Technik bekannten Nachteile vermeidet. Schließlich bestand die Aufgabe, Verwendungen für Polyester mit ungesättigten Gruppen bereit zu stellen.

Es wurde nun überraschend gefunden, dass die Aufgabe durch die eingangs definiertten hyperverzweigten Polyester mit ungesättigten Gruppen gelöst werden kann.

Hyperverzweigte Polyester im Sinne der vorliegenden Erfindung sind molekular und strukturell uneinheitlich. Sie unterscheiden sich durch ihre molekulare und strukturelle Uneinheitlichkeit von Dendrimeren, die strukturell und molekular einheitlich aufgebaut sind.

Erfindungsgemäße hyperverzweigte Polyester mit ethylenisch ungesättigten Gruppen sind erhältlich durch Umsetzung von mindestens einem hyperverzweigten Polyester, der erhältlich ist durch Kondensation von
(a) mindestens einer Dicarbonsäure oder mindestens eines Derivats derselben mit mindestens einem mindestens trifunktionellen Alkohol
   oder
(b) mindestens einer Tricarbonsäure oder höheren Polycarbonsäure oder mindestens eines Derivats derselben mit mindestens einem Diol
mit (c) mindestens einer Verbindung mit mindestens einer ethylenische Doppelbindung.

Zu Dicarbonsäuren nach Variante (a) gehören beispielsweise Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-cyclohexan-1,3-dicarbonsäure,cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus
C₁-C₁₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und cycloheptyl;
Alkylengruppen wie Methylen oder Ethyliden oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-naphthyl und 2-Naphthyl, besonders bevorzugt Phenyl.

Als beispielhafte Vertreter für substituierte Dicarbonsäuren seien genannt 2-Methylmalonsäure, 2-Ethylmalonsäure, 2-Phenylmalonsäure, 2-Methylbernsteinsäure, 2-Ethylbemsteinsäure, 2-Phenylbernsteinsäure, Itaconsäure, 3,3-Dimethylglutarsäure.

Weiterhin gehören zu Dicarbonsäuren nach Variante (a) ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Dicarbonsäuren lassen sich entweder als solche oder in Form von Derivaten einsetzen.

Unter Derivaten werden bevorzugt verstanden die betreffenden Anhydride in monomerer oder auch polymerer Form, Mono- oder Dialkylester, bevorzugt Mono- oder Dimethylester oder-die entsprechenden Mono- oder Diethylester, aber auch die von höheren Alkoholen wie-beispielsweise n-Propanol, iso-Propanol, n-Butanol, Isobutanol, tert.-Butanol, n-Pentanol, n-Hexanol abgeleiteten Mono- und Dialkylester,
ferner Mono- und Divinylester sowie
gemischte Ester, bevorzugt Methylethylester.

Im Rahmen der vorliegenden Erfindung ist es auch möglich, ein-Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder-Dimethylester ein. Ganz besonders bevorzugt setzt man Adipinsäure ein.

Als mindestens trifunktionelle Alkohole nach Variante (a) sind zu nennen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Weiterhin sind Glycerin-Oligomere geeignet, beispielsweise der allgemeinen Formel III 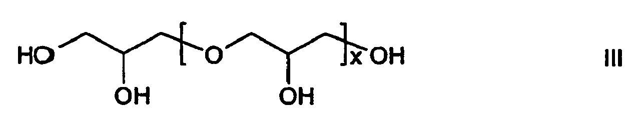 wobei x eine ganze Zahl im Bereich von 1 bis 10, bevorzugt 1 bis 5 und besonders bevorzugt 2 bis 3 ist. Natürlich sind auch Mischungen von verschiedenen Glycerin-Oligomeren und von Glycerin-Oligomeren mit Glycerin geeignet.

Geeignet sind weiterhin Polyetherpolyole, die durch Ethoxylierung und/oder Propoxylierung von Verbindungen mit mindestens 3 Gruppen, die acide H-Atome aufweisen, erhältlich sind. Bevorzugt ist die Ethoxylierung.

Beispiele für Verbindungen, die mindestens 3 Gruppen mit aciden H-Atomen aufweisen, umfassen Alkohole, insbesondere gesättigte Alkohole, die mindestens 3 OH-Gruppen aufweisen, wie Glycerin, Trimethylolethan, Trimethylolpropan, Ditrimethylolpropan oder Pentaerythrit. Es können aber auch geeignete Amine oder Aminoalkohole eingesetzt werden, wie beispielsweise Diethanolamin, Dipropanolamin, Diisopropanolamin, Triethanolamin, Tris(hydroxymethyl)aminomethan oder Diisopropylethanolamin.

Der Grad der Ethoxylierung liegt üblicherweise zwischen 0,1 und 10 Ethylenoxideinheiten pro Gruppe mit acidern H. Bevorzugt sind 1 bis 6 und besonders bevorzugt 2 bis 5 Einheiten. Das zahlenmittlere Molekulargewicht Mₙ der eingesetzten Polyetherpolyole liegt üblicherweise zwischen 100 und 1000 g/mol. Bevorzugt werden ethoxyliertes Trimethylolpropan, ethoxyliertes Glycerin oder ethoxyliertes Pentaerythrit eingesetzt.

Weiterhin geeignet sind sternförmige Moleküle mit mindestens 3 Armen aus PPO-PEO-Blöcken.

Bevorzugt sind Glycerin, Triglycerin, Trimethylolpropan, Trimethylolethan und Pentaerythrit.

Tricarbonsäuren oder Polycarbonsäuren nach Variante (b) sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden
die betreffenden Anhydride in monomerer oder auch polymerer Form,
Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert-Butanol, n-Pentanol, n-Hexanol abgeleiteten Mono- Di- und Triester, ferner Mono-, Di- oder Trivinylester
sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen.

Diole im Sinne von Variante (b) der vorliegenden Erfindung sind beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol,1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H oderGemische von zwei oder mehr Vertretern der voranstehenden Verbindungen, wobei n eine ganze Zahl ist und 100 > n ≥4. Dabei kann eine oder auch beide Hydroxylgruppen in den vorstehend genannten Diolen auch durch SH-Gruppen ersetzt werden, wie beispielsweise in Mercaptoethanol. Bevorzugt sind Ethylenglykol, Propan-1,2-diol, Propan-1,3-diol, Butan-1,4-diol, Hexan-1,6-diol sowie Diethylenglykol, Triethylenglykol, Dipropylenglykol und Tripropylenglykol.

Die Molverhältnis Hydroxylgruppen zu Carboxylgruppen bei den Varianten (a) und (b) beträgt 2:1 bis 1:2, insbesondere 1,5:1 bis 1:1,5.

Mindestens trifunktionelle Alkohole nach Variante (a) können Hydroxylgruppen jeweils gleicher Reaktivität aufweisen.

Mindestens trifunktionelle Alkohole nach Variante (a) können aber auch Hydroxylgruppen mit mindestens zwei chemisch unterschiedlichen Reaktivitäten aufweisen.

Die unterschiedliche Reaktivität der Hydroxylgruppen kann dabei entweder auf chemischen (z.B. primäre/sekundäre/tertiäre OH Gruppe) oder auf sterischen Ursachen beruhen. Bevorzugt sind hier auch mit Säuregruppen reaktive Verbindungen, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Beispielsweise kann es sich bei dem Triol um ein Triol handeln, welches primäre und sekundäre Hydroxylgruppen aufweist, bevorzugtes Beispiel ist Glycerin.

Nach Variante (a) lässt sich mindestens trifunktioneller Alkohol auch als Alkoholmischung mit einer mittleren Hydroxylfunktionalität größer als 2 einsetzen.

Nach Variante (b) lässt sich Tricarbonsäure oder höhere Carbonsäure auch als Carbonsäuremischung mit einer mittleren COOH-Funktionalität größer als 2-einsetzen.

Als Verbindungen mit mindestens einer ethylenischen Doppelbindung sind vorzugsweise Verbindungen mit endständiger ethylenischer Doppelbindung zu nennen, d.h. eines der beiden Kohlenstoffatome der C-C-Doppelbindung trägt lediglich Wasserstoffatome als Substituenten. Verbindungen mit ethylenisch ungesättigter Doppelbindung können beispielsweise ethylenisch ungesättigte Carbonsäuren sein, ungesättigte Alkohole, ungesättigte Amine und insbesondere ungesättigte Carbonsäureester.

Beispiele für Verbindungen mit mindestens einer ethylenischen Doppelbindung sind Verbindungen der allgemeinen Formel 1a oder 1b, 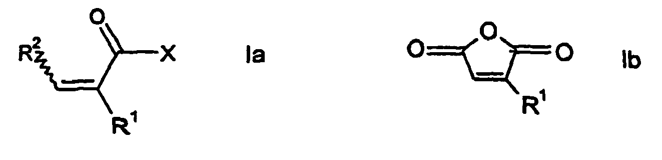 in denen die Variablen wie folgt definiert sind:
R¹ gewählt aus
   unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert-Butyl;
   oder Wasserstoff,
   ganz besonders bevorzugt sind Wasserstoff und Methyl;
R² gewählt aus
   unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
   COOH,
   C₂-C₆-Alkenyl, wie beispielsweise -CH=CH₂, syn-CH=CH-CH₃, anti-CH=CH-CH₃, und ganz besonders bevorzugt Wasserstoff.
   - X: wird gewählt aus Halogen, wie F, Br, I und insbesondere-Cl, und O-R³, wobei
   - R³: gewählt wird aus Wasserstoff oder
   unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl. neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
   unverzweigtem oder verzweigtem C₁-C₁₀-Alkyl mit mindestens einer funktionellen Gruppe wie -OH, -SH, -NH₂, -NH-C₁-C₁₀-Alkyl, -NH-CO-C₁-C₁₀-Alkyl, insbesondere 2-Hydroxymethyl, 2-Aminoethyl, 2-Mercaptoethyl, 3-Hydroxypropyl, 3-Aminopropyl, ω-Hydroxy-n-butyl, ω-Amino-n-butyl,
   Polyethylenglykolderivaten der allgemeinen Formel -(CH₂-CH₂-O)ₙ-H, wobei n eine ganze Zahl von 2 bis 100, bevorzugt bis 50 und besonders bevorzugt bis 10 ist, Polypropylenglykolderivate der allgemeinen Formel -[CH(CH₃)-CH₂-O]ₙ-H, wobei n wie vorstehend definiert ist, Glycidyl; 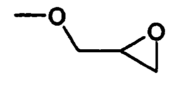
   - H-CO (Formyl) oder
   - unverzweigtem oder verzweigtem C₁-C₁₀-Alkyl-CO, wie Acetyl, Propionyl, n-Butyroyl, n-Valeroyl,
   - C₆-C₁₀-Aryl-CO wie α-Naphthoyl, β-Naphthoyl und insbesondere Benzoyl.

Andere Beispiele für Verbindungen mit mindestens einer ethylenischen Doppelbindung sind
ungesättigte Carbonsäuren mit 3 bis 30 Kohlenstoffatomen und einer bis fünf C-C-Doppelbindungen, wie beispielsweise Linolsäure, Linolensäure, Rizinussäure, Erucasäure (*cis*-CH₃(CH₂)₇CH=CH-(CH₂)₁₁-COOH, Ölsäure, Eleostearinsäure (*cis,trans, trans-*9,11,13-Octadecatriensäure),
ungesättigte Carbonsäuren mit 3 bis 30 Kohlenstoffatomen und einer bis fünf C-C-Doppelbindungen im Gemisch mit gesättigten Carbonsäuren; derartige Gemische sind beispielsweise als natürliche oder modifizierte natürliche Öle erhältlich wie z.B. Leinsamenöl, Sojabohnenöl, Sonnenblumenöl, Färberdistelöl, Rizinusöl, dehydriertes Rizinusöl;
ungesättigte Alkohole mit 3 bis 40 C-Atomen und einer bis fünf C-C-Doppelbindungen wie beispielsweise Allylalkohol, Hex-1-en-3-ol, Hex-2-en-1-ol;
ungesättigte Amine mit 3 bis 20 C-Atomen und einer bis fünf C-C-Doppelbindungen wie beispielsweise Allylamin und Hex-1-en-3-amin.

Weiterhin sind Ether von Di- und Polyolen geeignet, in denen mindestens eine Hydroxylgruppe mit einem ungesättigten Alkohol verethert und mindestens eine Hydroxylgruppe unverethert ist, beispielsweise Trimethylolpropandiallylether, Trimethylolpropanmonoallylether, 1,6-Hexandiolmonovinylether, wobei weitere Hydroxylgruppen mit gesättigten Alkoholen verethert sein können.

Weiterhin sind Ester von Di- und Polyolen geeignet, in denen mindestens eine Hydroxylgruppe mit einer ungesättigten Säure verestert und eine mindestens Hydroxylgruppe unverestert ist, wobei weitere Hydroxylgruppen mit gesättigten Säuren verestert sein können, beispielsweise Pentaerythrittri(meth)acrylat, Pentaerythrittriallylether, Pentanerythritdi(meth)acrylatmonostearat.

Weiterhin sind Vinylester zu nennen wie beispielsweise Vinylacetat und Vinylpropionat.

Weiterhin sind Monoepoxide von Dienen und Trienen zu nennen wie beispielsweise Butadienmonoepoxid.

Weiterhin sind ungesättigte Halogenide mit 2 bis 20 C-Atomen und einer bis fünf C-C-Doppelbindungen zu nennen wie beispielsweise Vinylchlorid, Allylchlorid, Allylbromid.

Weiterhin sind Isocyanato(meth)acrylate zu nennen, wie sie beispielsweise in DE-A 100 38 617 und in EP-A 1 110 946 offenbart sind, zu nennen, insbesondere Umsetzungsprodukte von Di- oder Triisocyanate wie Toluolendiisocyanat, Isophorondiisocyanat, Hexamethylendiisocyanat, Diphenylmethandiisocyanat (s. Formel), 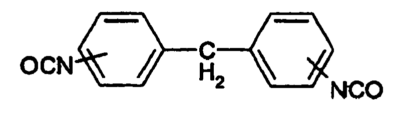 mit Verbindungen der allgemeinen Formel II 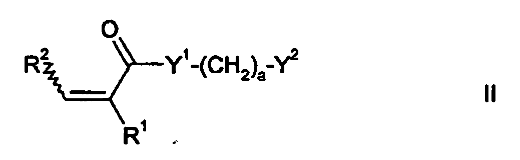 wobei in Formel II die Variablen R¹ und R² wie vorstehend definiert sind und die übrigen Variablen wie folgt definiert werden:
- a: eine bedeutet ganze Zahlt im Bereich von 2 bis 20, vorzugsweise im Bereich von 2 bis 4
- Y¹: wird gewählt aus Sauerstoff, Schwefel oder NH,
- Y²: wird gewählt aus -OH, -SH oder NH₂.

Besonders bevorzugte Isocyanato(meth)acrylate sind 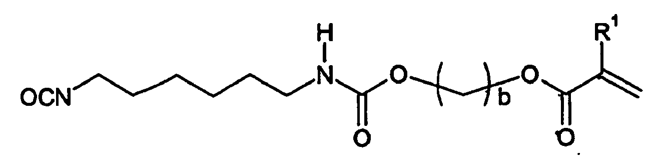 mit R¹ wie oben definiert und insbesondere Wasserstoff und Methyl, und b ist eine ganze Zahl im Bereich von 2 bis 6, ganz besonders von 2 bis 4.

Weiterhin sind ungesättigte halogenierte Silane zu nennen, bevorzugt ist ClSi(CH₂CH=CH₂)₃.

Weiterhin sind ungesättigte Amine der allgemeinen Formeln R⁵-NH₂ und R⁵R⁶NH zu nennen, wobei R⁵ ein C₂-C₂₀-Alkenylrest mit einer bis 3 C-C-Doppelbindungen ist und R⁶ gewählt wird aus C₁-C₁₀-Alkyl, das wie oben stehend definiert ist, und R⁵. Bevorzugte ungesättigte Amine sind Diallylamin und Allylamin.

Erfindungsgemäße hyperverzweigte Polyester mit ethylenisch ungesättigten Gruppen haben in der Regel ein mittleres Molekulargewicht Mₙ von 600 g/mol bis 50.000 g/mol, bevorzugt von 950 g/mol bis 20.000 g/mol.

Erfindungsgemäße hyperverzweigte Polyester mit ethylenisch ungesättigten Gruppen haben in der Regel ein mittleres Molekulargewicht M_{w} von 1000 g/mol bis 100.000 g/mol, bevorzugt von 1100 g/mol bis 50.000 g/mol, bestimmt durch Gelpermeationschromatographie.

Erfindungsgemäße hyperverzweigte Polyester mit ethylenisch ungesättigten Gruppen fallen üblicherweise als schwer trennbare Gemische von unterschiedlichen Strukturisomeren Oligo- und Polymeren an.

Erfindungsgemäße hyperverzweigte Polyester mit ethylenisch ungesättigten Gruppen tragen im Durchschnitt mindestens eine ungesättigte Gruppe pro Molekül, bevorzugt im Durchschnitt mindestens 2 und besonders bevorzugt mindestens 3. Die Zahl der ethylenisch ungesättigten Gruppen pro Molekül kann man durch an sich bekannte Methoden bestimmen, beispielsweise durch Bestimmung der Jod-Zahl oder durch Kombination von UV/vis-Spektropskopie und ¹H-NMR-Spektroskopie. Im Rahmen der vorliegenden Erfindung gelten auch hyperverzweigte Polyester mit im Durchschnitt nur einer ethylenisch ungesättigten Gruppe als erfindungsgemäße hyperverzweigte Polyester mit ethylenisch ungesättigten Gruppen.

In einer Ausführungsform der vorliegenden Erfindung beträgt die Polydispersität der erfindungsgemäßen hyperverzweigten Polyester mit ethylenisch ungesättigten Gruppen 1,05 bis 50, bevorzugt 1,1 bis 40, besonders bevorzugt bis 30 und ganz besonders bevorzugt bis 10.

Erfindungsgemäße hyperverzweigte Polyester mit ethylenisch ungesättigten Gruppen sind üblicherweise sehr gut löslich, d.h. man kann klare Lösungen mit bis zu 50 Gew.-%, in einigen Fällen sogar bis zu 80 Gew.-%, der erfindungsgemäßen Polyester mit ethylenisch ungesättigten Gruppen in beispielsweise Tetrahydrofuran (THF), n-Butylacetat, Ethanol und zahlreichen anderen Lösemitteln darstellen, ohne dass mit bloßem Auge Gelpartikel detektierbar sind.

Erfindungsgemäße hyperverzweigte Polyester mit ethylenisch ungesättigten Gruppen zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8.

Ein weiterer Gegenstand der vorliegenden Erfindung sind Verfahren zur Herstellung der erfindungsgemäßen hyperverzweigten Polyester mit ethylenisch ungesättigten Gruppen.

In einer Variante, die im Folgenden auch als Variante A bezeichnet wird, ist das erfindungsgemäße Verfahren dadurch gekennzeichnet, dass man mindestens einen hyperverzweigten Polyester synthetisiert durch Kondensation von
(a) mindestens einer Dicarbonsäure oder mindestens eines Derivats derselben mit mindestens einem mindestens trifunktionellen Alkohol
   oder
(b) mindestens einer Tricarbonsäure oder höheren Polycarbonsäure oder mindestens einem Derivat derselben mit mindestens einem Diol,
   und danach mit (c) mindestens einer Verbindung mit mindestens einerethylenisch ungesättigten Doppelbindung umsetzt.

In einer anderen Variante, die im Folgenden auch Variante B bezeichnet wird, ist das erfindungsgemäße Verfahren dadurch gekennzeichnet, dass man mindestens einen erfindungsgemäßen hyperverzweigten Polyester mit ethylenisch ungesättigten Gruppen durch Kondensation von
(a) mindestens einer Dicarbonsäure oder mindestens einem Derivat derselben mit mindestens einem mindestens trifunktionellen Alkohol
   oder
(b) mindestens einer Tricarbonsäure oder höheren Polycarbonsäure oder mindestens einem Derivat derselben mit mindestens einem Diol,
   in Gegenwart von (c) mindestens einer Verbindung mit mindestens einer ethylenisch ungesättigten Doppelbindung synthetisiert.

Im Folgenden werden funktionelle Gruppen von Verbindungen (c) mit mindestens einer ethylenisch ungesättigten Doppelbindung, die mit funktionellen Gruppen von Polyester reagieren können, vereinfachend als funktionelle Gruppen von Verbindungen (c) definiert. Dementsprechend werden Hydroxylgruppen oder Carboxylgruppen von hyperverzweigtem Polyester, die mit den jeweiligen funktionellen Gruppen von (c) reagieren können, vereinfachend auch als funktionelle Gruppen von hyperverzweigtem Polyester bezeichnet.

Im Folgenden beziehen sich die Ausführungen auf beide Varianten des erfindungsgemäßen Verfahrens, wenn nicht ausdrücklich anders angegeben.

Die Substanzklassen (a), (b) sowie (c) sind vorstehend definiert.

Zur Durchführung des erfindungsgemäßen Verfahrens nach Variante A führt man ein Zweistufen-Verfahren durch. Zur Durchführung des erfindungsgemäßen Verfahrens nach Variante B führt man ein Einstufenverfahren durch.

Zur Durchführung des erfindungsgemäßen Verfahrens nach Variante A wählt man vorzugsweise ein Verhältnis von
a) mindestens einer Dicarbonsäure oder mindestens eines Derivats derselben mit mindestens einem mindestens trifunktionellen Alkohol
   oder
b) mindestens einer Tricarbonsäure oder höheren Polycarbonsäure oder mindestens einem Derivat derselben mit mindestens einem Diol, so dass das Verhältnis von Carboxylgruppen bzw. derivatisierten Carboxylgruppen zu Hydroxylgruppen etwa 2 : 1 bis 1 : 2 beträgt, bevorzugt 3 : 2 bis 2 : 3.

Anschließend setzt man bei der Durchführung des erfindungsgemäßen Verfahrens nach Variante A soviel Verbindung mit mindestens einer ethylenisch ungesättigten Doppelbindung (c) zu, dass das Molverhältnis von funktionellen Gruppen von hyperverzweigtem Polyester zu funktionellen Gruppen von (c) im Bereich von 100 : 1 bis 1 : 10 liegt, bevorzugt 20 : 1 bis 1 : 2, besonders bevorzugt bis 1 : 1.

Zur Durchführung des erfindungsgemäßen Verfahrens nach Variante B wählt man vorzugsweise ein Verhältnis von
a) mindestens einer Dicarbonsäure oder mindestens eines Derivats derselben mit mindestens einem mindestens trifunktionellen Alkohol
   oder
b) mindestens einer Tricarbonsäure oder höheren Polycarbonsäure oder mindestens einem Derivat derselben mit mindestens einem Diol
   und
c) mindestens einer Verbindung mit mindestens einer ethylenisch ungesättigten Doppelbindung
   so, dass das Verhältnis von Carboxylgruppen bzw. derivatisierten Carboxylgruppen nach (a) bzw. (b) zu Hydroxylgruppen nach (b) bzw. (a) im Bereich von 3 :1 bis 1 : 3 liegt. Weiterhin wählt man die Menge an (c) so, dass das Molverhältnis von funktionellen Gruppen von *in situ* gebildetem hyperverzweigtem Polyester zu funktionellen Gruppen von (c) im Bereich von 100:1 bis 1 : 10 liegt, bevorzugt 20 : 1 bis 1 : 1.

Man kann das erfindungsgemäße Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH ≤6, insbesondere ≤5) und saures Aluminiumoxid zu nennen. Weiterhin sind beispielsweise Aluminiumverbindungen der allgemeinen Formel Al(OR⁴)₃ und Titanate der allgemeinen Formel Ti(OR⁴)₄ als saure anorganische Katalysatoren einsetzbar, wobei die Reste R⁴ jeweils gleich oder verschieden sein können und unabhängig voneinander gewählt sind aus
C₁-C₁₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R⁴ in Al(OR⁴)₃ bzw. Ti(OR⁴)₄ jeweils gleich und gewählt aus Isopropyl oder 2-Ethylhexyl.

Bevorzugte saure metallorganische Katalysatoren sind beispielsweise gewählt aus Dialkylzinnoxiden (R⁴)₂SnO, wobei R⁴ wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist. Weiterhin bevorzugt ist Di-n-butylzinndilaurat, Dibutylzinndiacetat und Di-n-butylzinndi-n-butyrat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann saure lonentauscher als saure organische Katalysatoren einsetzen, beispielsweise Sulfonsäuregruppen-haltige Polystyrolharze, die mit etwa 2 mol-% Divinylbenzol vernetzt sind..

Man kann Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisier ter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Enzyme oder Zersetzungsprodukte von Enzymen gehören nicht zu den sauren organischen Katalysatoren im Sinne der vorliegenden Erfindung. Gleichfalls gehören die erfindungsgemäß umgesetzten Dicarbonsäuren nicht zu den sauren organischen Katalysatoren im Sinne der vorliegenden Erfindung.

In einer anderen Ausführungsform wird das erfindungsgemäße Verfahren in Gegenwart mindestens eines Enzyms durchgeführt. Bevorzugt ist die Verwendung von Lipasen und Esterasen. Gut geeignete Lipasen und Esterasen sind Candida cylindracea, Candida lipolytica, Candida rugosa, Candida antarctica, Candida utilis, Chromobacterium viscosum, Geotrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in Organic Chemistry", 3. Auflage 1997, Springer Verlag, Kapitel 3.2 "Immobilization" Seite 345-356. Immobilisierte-Enzyme sind kommerziell erhältlich, beispielsweise bei Novozymes Biotech Inc., Dänemark.

Die Menge an eingesetztem Enzym beträgt 1 bis 20 Gew.-%, insbesondere 10-15 Gew.-%, bezogen auf die Masse der insgesamt eingesetzten umzusetzenden Ausgangsmaterialien.

In einer Ausführungsform der vorliegenden Erfindung kann das erfindungsgemäße Verfahren unter Inertgasatmosphäre durchgeführt werden, das heißt beispielsweise unter Kohlendioxid, Stickstoff oder Edelgas, unter denen insbesondere Argon zu nennen ist.

Wünscht man das erfindungsgemäße Verfahren in Abwesenheit von Enzym durchzuführen, so wird vorzugsweise bei Temperaturen von 80 bis 200°C gearbeitet Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Wünscht man das erfindungsgemäße Verfahren in Gegenwart von Enzym durchzuführen, so wird vorzugsweise bei Temperaturen über 40°C, besonders bevorzugt über 60°C gearbeitet. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Die Druckbedingungen des erfindungsgemäßen Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die gewünschten Produkte leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen. Man kann auch Dialyseverfahren zur weiteren Aufreinigung einsetzen. Besonders geeignet sind Dialyseverfahren unter Verwendung von benzoylierten Zellulosemembranen. Dialyseverfahren sind besonders geeignet zur Abtrennung nicht umgesetzter schwerftüchtiger niedermolekularer Reaktionspartner wie beispielsweise Fettsäuren.

Wünscht man das erfindungsgemäße Verfahren nach Variante A durchzuführen, so kann man auf die Isolierung von hyperverzweigtem Polyester verzichten und durch Zugabe von (c) mindestens einer Verbindung mit mindestens einer ethylenischen Doppelbindung unmittelbar weiterarbeiten.

Wünscht man das erfindungsgemäße Verfahren nach Variante A durchzuführen, so kann man in den zwei Stufen zwei verschiedene Katalysatoren einsetzen. So kann man beispielsweise hyperverzweigten Polyester zunächst durch Enzymkatalyse herstellen und anschließend (c) mindestens eine Verbindung mit mindestens einer ethylenischen Doppelbindung durch Katalyse mit beispielsweise (R⁴)₂SnO ankondensieren. Man kann ebenfalls beispielsweise hyperverzweigten Polyester durch Katalyse mit beispielsweise (R⁴)₂SnO herstellen und anschließend c) mindestens eine Verbindung mit mindestens einer ethylenischen Doppelbindung durch Enzymkatalyse ankondensieren.

Wünscht man das erfindungsgemäße Verfahren nach Variante B durchzuführen, so ist es bevorzugt, in Gegenwart von Radikalfängern (Inhibitoren) zu arbeiten. Geeignete Inhibitoren sind beispielsweise Hydrochinon, Hydrochinonmonomethylether, Phenothiazin, Phenolderivative wie z.B. 2-tert.-Butyl-4-methylphenol, 6-tert.-Butyl-2,4-dimethylphenol und N-Oxylverbindungen wie z.B. 4-Hydroxy-2,2,6,6-tetramethylpiperidin-N-oxyl (TEMPOL), 4-Oxo-2,2,6,6-tetramethyl-piperidin-N-oxyl, 2,2,6,6-Tetramethyl-piperidin-N-oxy (TEMPO): Übliche Mengen von Inhibitor sind im Bereich von 50 und 2000 ppm, jeweils bezogen auf Gesamtmenge an eingesetzter Verbindung mit mindestens einer ethylenischen Doppelbindung.

Wünscht man das erfindungsgemäße Verfahren nach Variante A durchzuführen, so ist es bevorzugt, nach der Zugabe von (c) mindestens einer Verbindung mit mindestens einer ethylenischen Doppelbindung in Gegenwart von Radikalfängern (Inhibitoren) zu arbeiten, wobei geeignete Inhibitoren vorstehend beschrieben sind. Natürlich kann man Inhibitor auch bereits vor der Zugabe von (c) mindestens einer Verbindung mit mindestens einer ethylenischen Doppelbindung zusetzen.

Zur Durchführung des erfindungsgemäßen Verfahrens kann man in Gegenwart eines Wasser entziehenden Mittels als Additive arbeiten, das man zu Beginn der Reaktion zusetzt. Geeignet sind beispielsweise Molekularsiebe, insbesondere Molekularsieb 4Å, MgSO₄ und Na₂SO₄. Man kann auch während der Reaktion weiteres Wasser entziehendes Mittel zufügen oder Wasser entziehendes Mittel durch frisches Wasserentziehendes Mittel ersetzen. Man kann während der Reaktion gebildetes Wasser bzw. Alkohol abdestillieren und beispielsweise einen Wasserabscheider einsetzen.

Das erfindungsgemäße Verfahren kann in Gegenwart von Lösemittel durchgeführt werden. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als isomerengemisch, Ethylbenzol, Chlorbenzol und ortho- und meta-Dichlorbenzol. Weiterhin sind als Lösemittel in Abwesenheit von sauren Katalysatoren ganz besonders geeignet Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauem führt.

Man kann jedoch auch ohne Einsatz von Lösemittel arbeiten.

Man kann das erfindungsgemäße Verfahren in Gegenwart von mindestens einer gesättigten Monocarbonsäure oder einem Derivat derselben oder mindestens einem gesättigten Monoalkohol durchführen, wodurch sich das Molekulargewicht der resultierenden Produkte beeinflussen lässt. Geeignete Vertreter sind beispielsweise Essigsäure, Propionsäure, Buttersäure, Isobuttersäure, Valeriansäure, Pivalinsäure, Capronsäure, Caprylsäure, n-Heptansäure, n-Octansäure, n-Nonansäure, n-Decansäure, n-Dodecansäure, n-Tetradecansäure, Palmitinsäure, Stearinsäure, Isostearinsäure, Isononansäure und 2-Ethylhexansäure.

Geeignete Vertreter für Alkohole sind Ethylenglykolmonomethylether, Ethylenglykolmono-n-butylether, Benzylalkohol, 1-Dodecanol, 1-tetradekanol, 1-Hexadecanol und 1-Octadecanol.

Ein weiterer Aspekt der vorliegenden Erfindung ist die Verwendung der erfindungsgemäßen hyperverzweigten Polyester mit ethylenisch ungesättigten Gruppen als Bindemittel, beispielsweise in Lacken und insbesondere in Klarlacken.

Ein weiterer Aspekt der vorliegenden Erfindung ist ein Verfahren zur Herstellung von strahlungshärtbaren Massen unter Verwendung von erfindungsgemäßen Polyestern mit ethylenisch ungesättigten Gruppen. Ein weiterer Aspekt der vorliegenden Erfindung sind strahlungshärtbare Massen, enthaltend erfindungsgemäße Polyester mit ungesättigten Gruppen.

Erfindungsgemäße strahlungshärtbaren Massen können neben mindestens einem erfindungsgemäßen Polyester mit ethylenisch ungesättigten Gruppen noch Reaktivverdünner, Photoinitiatoren und andere lacktypische Additive enthalten.

Geeignete Reaktivverdünner können beispielsweise strahlenhärtbare, radikalisch polymerisierbare Reaktiwerdünner sein wie z. B. die Triacrylester des Trimethylolpropan, Tetraacrylester des Pentaerythrit und deren ethoxylierten und/oder propoxylierten Derivate, Diacrylester des Dipropylenglykol, Tripropylenglykol, Diethylenglykol, 1,2-Ethandiol, 1,3- oder 1,4-Butandiol oder 1,6-Hexandiol.

Genannt seien außerdem z.B. C₁-C₂₀-Alkyl(meth)acrylate und außerdem Vinylaromaten mit bis zu 20C-Atomen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der vorstehend genannten (Meth)acrylsäurealkylester geeignet

Als vinylaromatische Verbindungen kommen z.B. Vinyltoluol, α-Butytstyrol, 4-n-Butylstyrol, 4-n-Decylstyrol und vorzugsweise Styrol in Betracht.

Erfindungsgemäße strahlungshärtbaren Massen enthalten vorzugsweise Photoinitiator in Anteilen von 0,1 bis 5 Gew.-%, bezogen auf den jeweiligen Lack.

Als Photoinitiatoren können dem Fachmann bekannte Photoinitiatoren verwendet werden, z.B. solche in "Advances in Polymer Science", Volume 14, Springer Berlin 1974 oder in K. K Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide Irgacure 819 (Bis(2,4,6-Trimethylbenzoyl)phenylphosphinoxid), wie sie z.B. in EP-A 0 007 508, EP-A 0 057 474, DE-A 196 18 720, EP-A 0 495 751 oder EP-A 0 615 980 beschrieben sind, beispielsweise 2,4,6-Trimethylbenzoyldiphenylphosphinoxid, Ethyl-2,4,6-trimethylbenzoylphenylphosphinat, Benzophenone, Hydroxyacetophenone, Phenylglyoxylsäure und ihre Derivate oder Gemische der vorstehend genannten Photoinitiatoren. Als bevorzugte Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, para-Methoxyacetophenon, β-Methylanthrachinon, *tert-*Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-isopropylthioxanthon, 2,4-Dichlorthioxanthon, Benzoin, Benzoin-iso-butylether, Chloroxanthenon, Benzoin-tetrahydropyranylether, Benzoin-methylether, Benzoin-ethylether, Benzoin-butylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tris-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 19913 353 oder WO 98/33761 beschrieben.

Unter den genannten Photoinitiatoren sind Phosphinoxide, α-Hydroxyketone und Benzophenone besonders bevorzugt.

Insbesondere können auch Gemische verschiedener Photoinitiatoren verwendet werden.

Photoinitiatoren können allein oder in Kombination mit einem Photopolymerisationspromotor, z.B. vom Benzoesäure-, Amin- oder ähnlichem Typ verwendet werden. Als weitere lacktypische Additive können beispielsweise Antioxidantien, Oxidationsinhibitoren, Stabilisatoren, Aktivatoren (Beschleuniger), Füllmittel, Pigmente, Farbstoffe, Entgasungsmittel, Glanzmittel, antistatische Agenzien, Flammschutzmittel, Verdicker, thixotrope Agenzien, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Tackifier), Chelatbildner oder Verträglichkeitsmittel (compatibilizer, siehe unten) verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen AD-DID 600 der Firma Wacker kommerziell erhältlich sind oder Hydroxylgruppen-haltige Amin-N-Oxide, wie beispielsweise 2,2,6,6-Tetramethylpiperidin-N-oxyl, 4-Hydroxy-2,2,6,6-Tetramethylpiperidin-N-oxyl.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, außerdem Kieselerde, Talkum, Aluminiumsilikate, Magnesiumsilikate und Calciumcarbonate.

Geeignete Stabilisatoren umfassen typische UV-Absorber wie Oxanilide, Triazine und Benzotriazol (letztere erhältlich als Tinuvin^{®} -Marken der Fa. Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Weiterhin geeignete Stabilisatoren sind beispielsweise N-Oxyle, wie z.B. 4-Hydroxy-2,2,6,6-tetramethyl-piperidin-N-oxyl, 4-Oxo-2,2,6,6-tetramethyl-piperidin-N-oxyl, 4-Acetoxy-2,2,6,6-tetramethyl-piperidin-N-oxyl, 2,2,6,6-tetramethyl-piperidin-N-oxyl, 4,4',4"-Tris(2,2,6,6-tetramethyl-piperidin-N-oxyl)-phosphit oder 3-Oxo-2,2,5,5-tetramethyl-pyrrolidin-N-oxyl, Phenole und Naphthole, wie z.B. p-Aminophenol, p-Nitrosophenol, 2-*tert*-Butylphenol, 4-*tert*.-Butylphenol, 2,4-di-*tert*.-Butylphenol, 2-Methyl-4-*tert*.-Butylphenol, 4-Methyl-2,6-*tert*.-Butylphenol (2,6-*tert*.-Butyl-p-Kresol) oder 4-*tert*.-Butyl-2,6-dimethylphenol, Chinone, wie z.B. Hydrochinon oder Hydrochinonmonomethylether, aromatische Amine, wie z.B. N,N-Diphenylamin, N-Nitrosodiphenylamin, Phenylendiamine, wie z.B. N,N'-Dialkyl-para-phenylendiamin, wobei die Alkylreste gleich oder verschieden sein können und jeweils unabhängig voneinander aus 1 bis 4 Kohlenstoffatome bestehen und geradkettig oder verzweigt sein können, Hydroxylamine, wie z.B. N,N-Diethylhydroxylamin, Harnstoffderivate, wie z.B. Harnstoff oder Thioharnstoff, phosphorhaltige Verbindungen, wie z.B. Triphenylphosphin, Triphenylphosphit oder Triethylphosphit oder schwefelhaltige Verbindungen, wie zB. Diphenylsulfid oder Phenothiazin.

Typische Zusammensetzungen für erfindungsgemäße strahlungshärtbare Massen sind beispielsweise
40 -100 Gew.-% eines oder mehrerer erfindungsgemäßer Polyester mit ethylenisch ungesättigten Gruppen, bevorzugt 50 - 90, besonders bevorzugt 60 - 90 und insbesondere 60 - 80 Gew.-%,
0 - 60 Gew.-% Reaktivverdünner, bevorzugt 5 - 50, besonders bevorzugt 6 - 40 und insbesondere 10 - 30 Gew.-%,
0 - 20 Gew.-% Photoinitiatoren, bevorzugt 0,5 -15, besonders bevorzugt 1 -10 und insbesondere 2 - 5 Gew.-% sowie
0 - 50 Gew.-% lacktypische Additive, bevorzugt 2 - 40, besonders bevorzugte 3 - 30 und insbesondere 5 - 20 Gew.-%, mit der Maßgabe, dass die Bestandteile zusammen 100 Gew.-% ergeben.

Erfindungsgemäße Polyester mit ethylenisch ungesättigten Gruppen eignen sich insbesondere zur Verwendung als oder in Massen, welche durch energiereiche Strahlung gehärtet werden können, im Rahmen der vorliegenden Erfindung auch erfindungsgemäße strahlungshärtbare Massen genannt

Ein weiterer Aspekt der vorliegenden Erfindung ist ein Verfahren zur Beschichtung von Substraten, dadurch gekennzeichnet, dass man Substrate, beispielsweise Metall, Holz, Glas, Kunststoff (z.B. Polycarbonat), Textil, Leder, Papier oder Pappe, mit erfindungsgemäßen strahlungshärtbaren Massen, enthaltend erfindungsgemäßen hyperverzweigten Polyester mit ethylenisch ungesättigten Gruppen, nach dem Fachmann an sich bekannten Verfahren beschichtet und danach aktinischer Strahlung aussetzt. Als aktinische Strahlung sind beispielsweise elektromagnetische Strahlen mit einem Wellenlängenbereich von 100 bis 450 nm geeignet. Man kann mit erfindungsgemäßen strahlungshärtbaren Massen, beispielsweise mit Lack beschichtete Substrate aktinischer Strahlung mit einer Energie im Bereich von 80 bis 3000 mJ/cm² aussetzen. Aktinische Strahlung kann man beispielsweise in kontinuierlicher Form oder in Form von Blitzen einbringen. Als Strahlungsquellen geeignet sind z.B. Quecksilber-Niederdruckstrahler, -Mitteldruckstrahler oder- Hochdruckstrahler.

Eine Härtung mittels Elektronenstrahlen, insbesondere durch Sekundärelektronen in einem Energiebereich zwischen 0 und 50 eV ist ebenfalls möglich.

Es sind auch Kombinationen mehrerer Strahlungsquellen einsetzbar.

Die Erfindung wird durch Arbeitsbeispiele erläutert.

Allgemeine Vorbemerkungen:
Die Säurezahl wurde bestimmt nach DIN 53402. Mₙ und M_{w} wurden durch Gelpermeationschromatographie GPC in THF (Polymethylmethacrylateichung) bestimmt. Die OH-Zahl wurde nach DIN 53240 bestimmt. Der Einbau an ungesättigter Verbindung mit mindestens einer ethylenischen Doppelbindung wurde durch ¹H-NMR-Spektroskopie bestimmt

Die Reaktionen wurden unter Stickstoffatmosphäre durchgeführt, wenn nicht anders angegeben. Lösemittel wurden nach gängigen Laborvorschriften getrocknet, THF und 1,4-Dioxan beispielsweise durch Destillation Ober Na/Benzophenon.

Die in einigen Beispielen eingesetzte immobilisierte Lipase CA, kommerziell erhältlich als Novozym® 435, war wie folgt charakterisiert: 10.000 PLU/g (Propyl Laurate Units), 1 bis 10 gew.-% Enzym/g of Novozym® 435.

### Variante A

### Beispiel A1.1

1645 g (11,3 mol) Adipinsäure und 864 g (9,4 mol) Glycerin wurden in einem 5-I-Glaskolben vorgelegt, der mit Rührer, Innenthermometer, Gaseinleitungsrohr, Rückflusskühler und Vakuumanschluss mit Kühlfalle ausgerüstet war. Man gab 3,6 g Di-n-Butylzinnoxid zu, kommerziell erhältlich als Fascat® 4201, und erhitzte mit Hilfe eines Ölbads auf eine Innentemperatur von 140°C. Man legte einen verminderten Druck von 150 mbar an, um bei der Reaktion gebildetes Wasser abzutrennen. Die Reakdonsmischung wurde 3 Stunden bei der genannten Temperatur und dem genannten Druck gehalten, danach wurde der Druck auf 50 mbar abgesenkt und weitere 7 Stunden bei 140°C gehalten. Anschließend wurde auf Zimmertemperatur abgekühlt

Man erhielt 2147 g hyperverzweigten Polyester A1.1 als klare, viskose Flüssigkeit. Die analytischen Daten sind in Tabelle 1 zusammengefasst.

### Beispiel A1.2

460 g (3,2 mol) Adipinsäure und 240 g (2,6 mol) Glycerin wurden in einem 1-I-Glaskolben vorgelegt, der mit Rührer, lnnenthermometer, Gaseinieitungsrohr, Rückflusskühler und Vakuumanschluss mit Kühlfalle ausgerüstet war. Man gab 1 g Di-n-Butylzinnoxid zu, kommerziell erhältlich als Fascat® 4201, und erhitzte mit Hilfe eines Ölbads auf eine Innentemperatur von 150°C. Man legte einen verminderten Druck von 120°C an, um bei der Reaktion gebildetes Wasser abzutrennen. Die Reaktionsmischung wurde 3 Stunden bei der genannten Temperatur und dem genannten Druck gehalten, danach wurde der Druck auf 50 mbar abgesenkt und weitere 3 Stunden bei 150°C gehalten. Anschließend wurde auf Zimmertemperatur abgekühlt.

Man erhielt 582 g hyperverzweigten Polyester A1.2 als klare, viskose Flüssigkeit. Die analytischen Daten sind in Tabelle 1 zusammengefasst.

### Beispiel A1.3

1645 g (11,3 mol) Adipinsäure und 868 g (9,4 mol) Glycerin wurden in einem 5-I-Glaskolben vorgelegt, der mit Rührer, Innenthermometer, Gaseinleitungsrohr, Rückflusskühler und Vakuumanschluss mit Kühlfalle ausgerüstet war. Man gab 2,5 g Di-n-Butylzinnoxid zu, kommerziell erhältlich als rascat® 4201, und erhitzte mit Hilfe eines Ölbads auf eine Innentemperatur von 135°C. Man legte einen verminderten Druck von 100 mbar an, um bei der Reaktion gebildetes Wasser abzutrennen. Die Reaktionsmischung wurde 9 Stunden bei der genannten Temperatur und dem genannten Druck gehalten.

Danach gab man 383 g (4,1 mol) Glycerin zu, senkte den Druck zunächst auf 50 mbar und dann auf 20 mbar und hielt weitere 10 Stunden bei 135°C. Anschließend wurde auf Zimmertemperatur abgekühlt

Man erhielt 2409 g hyperverzweigten Polyester A1.3 als klare, viskose Flüssigkeit. Die analytischen Daten sind in Tabelle 1 zusammengefasst.

### Beispiel A2.1

521 g des hyperverzweigten Polyesters A1.1 wurden in einem 5-l-Glaskolben vorgelegt, der mit Rührer, Gaseinleitungsrohr, Rückflusskühler und Wasserabscheider ausgerüstet war, wobei der Wasserabscheider mit einer Vakuumpumpe verbunden war.

Es wurden 1,5 l Tetrahydrofuran (THF), 52 g (183 mmol) eines Reaktionsprodukts der Formel

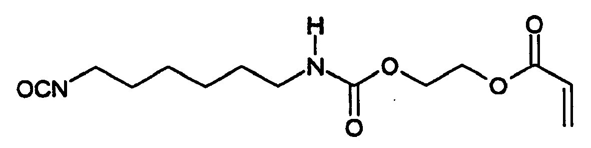

Reaktionsprodukt von Acrylsäure-2-hydroxyethylester und Hexamethylendiisocyanat nach EP-A 1 110 946) und 0,055 g 4-Hydroxy-2,2,6,6-tetramethyl-piperidin-N-oxyl zugegeben. Man hielt die Reaktionsmischung unter Rühren für eine Zeit von 2 Stunden auf einer Temperatur von 60°C.

Anschließend wurde das Tetrahydrofuran unter vermindertem Druck abdestilliert.

Man erhielt 539 g erfindungsgemäßen hyperverzweigten Polyester mit ungesättigten Gruppen A2.1 als klare, viskose Flüssigkeit. Die analytischen Daten sind in Tabelle 1 zusammengefasst.

### Beispiel A2.2

100 g des hyperverzweigten Polyesters A1.2 wurden in einem 250-ml-Glaskolben vorgelegt, der mit Rührer, Gaseinleitungsrohr, Rückflusskühler und Wasserabscheider ausgerüstet war, wobei der Wasserabscheider mit einer Vakuumpumpe verbunden war. Es wurden 12 ml (12,13 g, 105 mmol) Acrylsäure-2-hydroxyethylester, 26 g immobilisierte Lipase CA, kommerziell erhältlich als Novozym® 435), 0,33 g 4-Hydroxy-2,2,6,6-tetramethyl-piperidin-N-oxyl und 90 ml 1,4-Dioxan zugegeben. Man hielt die Reaktionsmischung unter Rühren für eine Zeit von 9,5 Stunden auf einer Temperatur von 65°C.

Anschließend wurde das immobilisierte Enzym durch Filtration abgetrennt und 1,4-Dioxan und bei der Reaktion gebildetes Wasser unter vermindertem Druck abgetrennt

Man erhielt 103 g erfindungsgemäßen hyperverzweigten Polyester mit ungesättigten Gruppen A2.2 als klare, viskose Flüssigkeit. Die analytischen Daten sind in Tabelle 1 zusammengefasst.

### Beispiel A3.2

100 g des hyperverzweigten Polyesters A1.2 wurden in einem 250-ml-Glaskolben vorgelegt, der mit Rührer, Gaseinteitungsrohr, Rückflusskühler und Wasserabscheider ausgerüstet war, wobei der Wasserabscheider mit einer Vakuumpumpe verbunden war. Es wurden 13 ml (13,6 g, 104 mmol) Acrylsäure-3-hydroxypropylester, 26 g immobilisierte Lipase CA, kommerziell erhältlich als Novozym® 435), 0,33 g 4-Hydroxy 2,2,6,6-tetmmethyl-piperidin-N-oxyl und 90 ml 1,4-Dioxan zugegeben. Man stellte einen Druck von 400 mbar ein und hielt die Reaktionsmischung unter Rühren für eine Zeit von 8 Stunden auf einer Temperatur von 65°C.

Anschließend wurde das immobilisierte Enzym durch Filtration abgetrennt und 1,4-Dioxan und bei der Reaktion gebildetes Wasser unter vermindertem Druck abgetrennt.

Man erhielt 102 g erfindungsgemäßen hyperverzweigten Polyester mit ungesättigten Gruppen A3.2 als klare, viskose Flüssigkeit. Die analytischen Daten sind in Tabelle 1 zusammengefasst.

### Beispiel A2.3

100 g des hyperverzweigten Polyesters A1.3 wurden in einem 250-ml-Glaskolben vorgelegt, der mit Rührer, Gaseinleitungsrohr, Rückflusskühler und Wasserabscheider ausgerüstet war, wobei der Wasserabscheider mit einer Vakuumpumpe verbunden war. Es wurden 10 g (69 mmol) Acrylsäure-4-hydroxybutylester, 7 g immobilisierte Lipase CA, kommerziell erhältlich als Novozym® 435), 0,1 g 4-Hydroxy-2,2,6,6-tetramethyl-piperidin-N-oxyl und 50 ml Toluol zugegeben. Man stellte einen Druck von 350 bis 400 mbar ein und hielt die Reaktionsmischung unter Rühren für eine Zeit von 8 Stunden auf einer Temperatur von 60°C.

Anschließend wurde das immobilisierte Enzyme durch Filtration abgetrennt und Toluol und bei der Reaktion gebildetes Wasser unter vermindertem Druck abgetrennt

Man erhielt 105 g erfindungsgemäßen hyperverzweigten Polyester mit ungesättigten Gruppen A2.3 als klare, viskose Flüssigkeit Die analytischen Daten sind in Tabelle 1 zusammengefasst

### Beispiel A2.4

300 g des hyperverzweigten Polyesters A1.1 wurden in einem 2-L-Glaskolben vorgelegt, der mit Rührer, Gaseinleitungsrohr, Rückflusskühler und Wasserabscheider ausgerüstet war, wobei der Wasserabscheider mit einer Vakuumpumpe verbunden war. Es wurden 300 g (mmol) Acrylsäuremethylester, 15 g immobilisierte Lipase CA, kommerziell erhältlich als Novozym® 435), 0,18 g 4-Hydroxy-2,2,6,6-tetramethyl-piperidin-N-oxyl und 500 ml Toluol zugegeben. Man hielt die Reaktionsmischung unter Rühren für eine Zeit von 8 Stunden auf einer Temperatur von 70°C und 400 mbar.

Anschließend wurde das immobilisierte Enzym durch Filtration abgetrennt und Toluol und bei der Reaktion gebildetes Methanol unter vermindertem Druck abgetrennt

Man erhielt 331 g erfindungsgemäßen hyperverzweigten Polyester mit ungesättigten Gruppen A2.4 als klare, viskose Flüssigkeit. Die analytischen Daten sind in Tabelle 1 zusammengefasst.

**Tabelle 1: Analytische Daten von hyperverzweigten Polyestern und erfindungsgemäβen hyperverzweigten Polyestern mit ungesättigten Gruppen, hergestellt nach Variante A**

| Produkt Nr. | Hyperverzweigter Polyester als Ausgangsmaterial | Mₙ [g/mol) | M_{w} [g/mol] | Säurezahl | OH-Zahl | Einbau [mmol /g] |
|---|---|---|---|---|---|---|
| A1.1 | - | 1640 | 3270 | 106 | 243 | 0 |
| A1.2 | - | 1230 | 1490 | 92 | n.b. | 0 |
| A1.3 | - | 1900 | 6910 | 31 | 416 | 0 |
| A2.1 | A1.1 | 2160 | 7140 | 75 | 181 | 0,24 |
| A2.2 | A1.2 | 1375 | 2080 | 43 | 144 | 0,44 |
| A3.2 | A1.2 | 1280 | 1770 | 63 | 185 | 0,35 |
| A2.3 | A1.3 | 3450 | 8500 | 21 | 389 | 0,5 |
| A2.4 | A1.1 | 2440 | 16780 | 47 | 155 | 0,82 |

| | | | | | | |
|---|---|---|---|---|---|---|
| Einbau: definiert als mmol Verbindung mit ethylenisch ungesättigter Doppelbindung/g hyperverzweigten Polyester, der als Ausgangsmaterial eingesetzt worden war. | | | | | | |

### Variante B

### Beispiel B1:

92 g (0,63 mol) Adipinsäure, 48 g (0,53 mol) Glycerin und 76 g (0,53 mol) Acrylsäure-4-hydroxybutylester wurden in einem 250-ml-Glaskolben vorgelegt, der mit Rührer, Innenthermometer, Gaseinleitungsrohr, Rückflusskühler und Vakuumanschluss mit Kühlfalle ausgerüstet war. Man gab 0,044 g 4-Hydroxy-2,2,6,6-tetramethyl-piperidin-N-oxyl und 0,15 g Di-n-Butylzinnoxid zu, kommerziell erhältlich als Fascat® 4201, und erhitzte mit Hilfe eines Ölbads auf eine Innentemperatur von 120°C. Man legte einen Druck von 150 mbar an, um bei der Reaktion gebildetes Wasser abzutrennen. Die Reaktionsmischung wurde 90 Minuten bei 120°C und dem genannten Druck und weitere 6½ Stunden bei 120°C und 15 mbar gehalten und anschließend auf Zimmertemperatur abgekühlt.

Man erhielt 111 g erfindungsgemäßen hyperverzweigten Polyester mit ungesättigten Gruppen B1 als klare, viskose Flüssigkeit. Die analytischen Daten sind in Tabelle 2 zusammengefasst.

### Beispiel B2

44 g (0,3 mol) Adipinsäure, 23 g (0,25 mol) Glycerin und 6,7 g (47 mmol) Acrylsäure-4-hydroxybutylester wurden in einem 250-ml-Glaskolben vorgelegt, der mit Rührer, Innenthermometer, Gaseinleitungsrohr, Rückflusskühler und Vakuumanschluss mit Kühlfalle ausgerüstet war. Man gab 0,06 g 4-Hydroxy-2,2,6,6-tetramethyl-piperidin-N-oxyl, 50 ml Toluol und 7 g immobilisierte Lipase CA, kommerziell erhältlich als Novozym® 435) zu und erhitzte mit Hilfe eines Ölbads auf eine Innentemperatur von 60°C. Die Reaktionsmischung wurde 21 Stunden bei 60°C und 200 mbar gehalten und anschließend auf Zimmertemperatur abgekühlt.

Anschließend wurde das immobilisierte Enzym durch Filtration abgetrennt und Toluol und bei der Reaktion gebildetes Wasser unter vermindertem Druck abgetrennt.

Man erhielt 58 g erfindungsgemäßen hyperverzweigten Polyester mit ungesättigten Gruppen B2 als klare, viskose Flüssigkeit. Die analytischen Daten sind in Tabelle 2 zusammengefasst.

### Beispiel B3

60 g (0,41 mol) Adipinsäure, 82 g (0,34 mol) Triglycerin und 4,9 g (34 mmol) Acrylsäure-4-hydroxybutylester wurden in einem 250-ml-Glaskolben vorgelegt, der mit Rührer, Innenthermometer, Gaseinleitungsrohr, Rückflusskühler und Vakuumanschluss mit Kühlfalle ausgerüstet war. Man gab 0,05 g 4-Hydroxy-2,2,6,8-tetramethyl-piperidin-N-oxyl und 0,15 g Di-n-Butylzinnoxid zu, kommerziell erhältlich als Fascat® 4201, und erhitzte mit Hilfe eines Ölbads auf eine Innentemperatur von 120°C. Man legte einen verminderten Druck von 150 mbar an, um bei der Reaktion gebildetes Wasser abzutrennen. Die Reaktionsmischung wurde 90 Minuten bei 120°C und dem genannten Druck und weitere 6½ Stunden bei 120°C und 15 mbar gehalten und anschließend auf Zimmertemperatur abgekühlt.

Man erhielt 120 g erfindungsgemäßen hyperverzweigten Polyester mit ungesättigten Gruppen B3 als klare, viskose Flüssigkeit. Die analytischen Daten sind in Tabelle 2 zusammengefasst.

### Beispiel B4

88 g (0,60 mol) Adipinsäure, 37,7 g (0,28 mol) Trimethylolpropan, 36,2 (0,25 mol) 1,4-bis-(Hydroxymethyl)-cyclohexan als cisitrans-Isomerengemisch und 8,8 g (61 mmol) Acrylsäure-4-hydroxybutylester wurden in einem 250-ml-Glaskolben vorgelegt, der mit Rührer, Innenthermometer, Gaseinleitungsrohr, Rückflusskühler und Vakuumanschluss mit Kühlfalle ausgerüstet war. Man gab 0,05 g 4-Hydroxy 2,2,6,6-tetramethylpiperidin-N-oxyl und 0,17 g Di-n-Butylzinnoxid zu, kommerziell erhältlich als Fascat® 4201, und erhitzte mit Hilfe eines Ölbads auf eine Innentemperatur von 120°C. Man legte einen verminderten Druck von 120 mbar an, um bei der Reaktion gebildetes Wasser abzutrennen. Die Reaktionsmischung wurde 7 Stunden bei 120°C und dem genannten Druck gehalten und eine weitere Stunde bei 120°C und 15 mbar gehalten und anschließend auf Zimmertemperatur abgekühlt.

Man erhielt 131 g erfindungsgemäßen hyperverzweigten Polyester mit ungesättigten Gruppen B4 als klare, viskose Flüssigkeit. Die analytischen Daten sind in Tabelle 2 zusammengefasst.

### Beispiel B5

88 g (0,60 mol) Adipinsäure, 46 g (0,5 mol) Glycerin und 7 g (70 mmol) Methylmethacrylat wurden in einem 250-ml-Glaskolben vorgelegt, der mit Rührer, Innenthermometer, Gaseinleitungsrohr, Rückflusskühler und Vakuumanschluss mit Kühlfalle ausgerüstet war. Man gab 0,1 g 4-Hydroxy-2,2,6,6-tetramethyl-piperidin-N-oxyl, 75 ml Toluol und 7 g immobilisierte Lipase CA zu, kommerziell erhältlich als Novozym® 435), stellte einen Druck von 250 mbar ein und erhitzte mit Hilfe eines Ölbads aufeine Innentemperatur von 60°C. Die Reaktionsmischung wurde 2 Stunden bei 60°C und dem genannten Druck und weitere 6 Stunden bei 60°C und 15 mbar gehalten und anschließend auf Zimmertemperatur abgekühlt.

Anschließend wurde das immobilisierte Enzym durch Filtration abgetrennt und Toluol und bei der Reaktion gebildetes Wasser und Methanol unter vermindertem Druck abgetrennt

Man erhielt 117 g erfindungsgemäßen hyperverzweigten Polyester mit ungesättigten Gruppen B5 als klare, viskose Flüssigkeit. Die analytischen Daten sind in Tabelle 2 zusammengefasst.

### Beispiel B6

88 g (0,60 mol) Adipinsäure, 168,2 g (0,25 mol) ethoxyliertes Trimethylolpropan der Formel CH₃CH₂C[CH₂(OCH₂CH₂)₅OH]₃, 36,2 (0,25 mol) 1,4-bis-(Hydroxymethyl)-cyclohexan als cis/trans-Isomerengemisch und 8,8 g (61 mmol) Acrylsäure-4-hydroxybutylester wurden in einem 250-ml-Glaskolben vorgelegt, der mit Rührer, Innenthermometer, Gaseinleitungsrohr, Rückflusskühler und Vakuumanschluss mit Kühlfalle ausgerüstet war. Man gab 0,1 g 4-Hydroxy-2,2,6,6-tetramethyl-piperidin-N-oxyl, 75 ml Toluol und 7 g immobilisierte Lipase CA, kommerziell erhältlich als Novozym® 435) zu und erhitzte mit Hilfe eines Ölbads auf eine Innentemperatur von 60°C. Die Reaktionsmischung wurde 8 Stunden bei 60°C und einem Druck von 200 mbar gehalten und anschließend auf Zimmertemperatur abgekühlt.

Anschließend wurde das immobilisierte Enzym durch Filtration abgetrennt und Toluol und bei der Reaktion gebildetes Wasser und Methanol unter vermindertem Druck abgetrennt.

Man erhielt 241 g erfindungsgemäßen hyperverzweigten Polyester mit ungesättigten Gruppen B6 als klare, viskose Flüssigkeit Die analytischen Daten sind in Tabelle 2 zusammengefasst.

**Tabelle 2: Analytische Daten von erfindungsgemäßen hyperverzweigten Polyestern mit ungesättigten Gruppen, hergestellt nach Variante B**

| Produkt Nr. | Mₙ [g/mol] | M_{w} [g/mol] | Säurezahl | OH-Zahl | Einbau |
|---|---|---|---|---|---|
| B1 | 975 | 1100 | 213 | 347 | 0,27 |
| B2 | 1660 | 3360 | 19 | n.b. | 0,76 |
| B3 | 680 | 1500 | 156 | 513 | 0,34 |
| B4 | 1250 | 1630 | 120 | 179 | 0,33 |
| B5 | 2100 | 3630 | 67 | 215 | 0,20 |
| B6 | 1780 | 2770 | 45 | 72 | 0,22 |

| | | | | | |
|---|---|---|---|---|---|
| Einbau: definiert als mmol Verbindung mit ethylenisch ungesättigter Doppelbindung/g hyperverzweigten Polyester, der als Ausgangsmaterial eingesetzt worden war. | | | | | |

### 3. Anwendungstechnische Prüfung

Erfindungsgemäßer hyperverzweigter Polyester A2.4 mit ungesättigten Gruppen gemäß Tabelle 1 wurde nach Tabelle 3 mit der angegebenen Menge eines Photoinitiatorgemisches, bestehend aus 50 Gewichtsprozent 1-Hydroxycyclohexylphenylketon und 50 Gewichtsprozent Benzophenon (kommerziell erhältlich als Irgacure ^{®}500 der Firma Ciba Spezialitätenchemie, in Tabelle 5 bezeichnet als "l 500°) gemischt, auf das jeweilige Substrat (Glas, Blech) aufgetragen und unter einer undotierten Quecksilberhochdrucklampe (Leistung 120 W/cm) mit einem Lampenabstand zum Substrat von 12 cm und einer Bandgeschwindigkeit von 10 m/min belichtet, so dass klebfreie Beschichtungen erhalten wurden.

Die Pendelhärte (PD) wurde nach DIN 53157 bestimmt und ist ein Maß für die Härte der Beschichtung. Die Angabe erfolgt in Anzahl der Schläge bis zum Stillstand des Pendels (Sg). Hohe Werte bedeuten dabei hohe Härte. Die Filme zur Bestimmung der Pendelhärte wurden mit Hilfe einer Kastenrakel auf Glas aufgetragen. Die Schichtdicke nach der Belichtung betrug ca. 70 µm.

Die Erichsentiefung (ET) wurde nach DIN 53156 bestimmt und ist ein Maß für die Flexibilität und Elastizität einer Beschichtung. Die Angabe erfolgt in Millimeter (mm). Hohe Werte bedeuten hohe Flexibilität. Die Filme zur Bestimmung der Erichsentiefung wurden mit Hilfe einer Spiralrakel auf Blech aufgetragen. Die Schichtdicke nach der Belichtung betrug ca. 40 µm.

**Tabelle 3: Ergebnisse der anwendungstechnischen Prüfung von erfindungsgemäßem hyperverzweigten Polyestern mit ungesättigten Gruppen A2.4**

| | I 500 (Gew.-%) | PD (Schläge) | ET (mm) |
|---|---|---|---|
| Beispiel 3.1 | 0 | Nicht messbar | Nicht messbar |
| Beispiel 3.2 | 1 | 21 | 5,4 |
| Beispiel 3.3 | 2 | 22 | 5,5 |
| Beispiel 3.4 | 3 | 22 | 5,5 |
| Beispiel 3.5 | 4 | 22 | 5,5 |

Eine Härtung durch Belichten mit UV-Strahlung gelang, wenn A2.4 Photoinitiator zugemischt wurde. Unter Verwendung des Photoinitiators wiesen die Filme nahezu identische Eigenschaften auf, unabhängig von dessen Konzentration. Man kann also Beschichtungen unter Verwendung von sehr geringen Mengen an Photoinitiator herstellen.

## Patentansprüche

1. Hyperverzweigte Polyester mit ethylenisch ungesättigten Gruppen, erhältlich durch Umsetzung von
(c) mindestens einer Verbindung mit mindestens einer ethylenischen Doppelbindung
mit mindestens einem hyperverzweigten Polyester, der erhältlich ist durch Kondensation von
(a) mindestens einer Dicarbonsäure oder mindestens eines Derivats derselben mit mindestens einem mindestens trifunktionellen Alkohol
oder
(b) mindestens einer Tricarbonsäure oder höheren Polycarbonsäure oder mindestens einem Derivat derselben mit mindestens einem Diol.

2. Hyperverzweigte Polyester mit ungesättigten Gruppen nach Anspruch 1, **dadurch gekennzeichnet, dass** es sich bei mindestens einer Verbindung mit mindestens einer ethylenischen Doppelbindung um eine Verbindung mit einer endständigen Doppelbindung handelt.

3. Hyperverzweigte Polyester mit ungesättigten Gruppen nach Anspruch 1 oder 2, **dadurch gekennzeichnet, dass** es sich bei mindestens einer Verbindung mit mindestens einer ethylenischen Doppelbindung um eine Verbindung der allgemeinen Formel la oder Ib 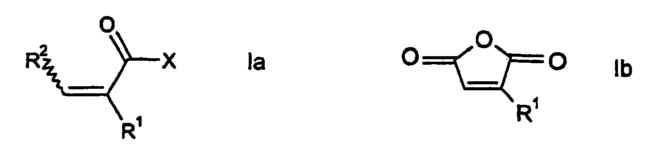 handelt, in denen die Variablen wie folgt definiert sind:
R¹ gewählt aus C₁-C₁₀-Alkyl, unverzweigt oder verzweigt, und Wasserstoff,

4. Hyperverzweigte Polyester mit ungesättigten Gruppen nach Anspruch 1 oder 2, **dadurch gekennzeichnet, dass** mindestens eine Verbindung mit mindestens einer ethylenischen Doppelbindung gewählt wird aus
ungesättigten Carbonsäuren mit 3 bis 30 Kohlenstoffatomen und einer bis fünf C-C-Doppelbindungen,
ungesättigte Alkohole mit 3 bis 40 C-Atomen und einer bis fünf C-C-Doppelbindungen,
ungesättigte Amine mit 3 bis 20 C-Atomen und einer bis fünf C-C-Doppelbindungen,
Ether von Di- und Polyolen, in denen mindestens eine Hydroxylgruppe mit einem ungesättigten Alkohol verethert und mindestens eine Hydroxylgruppe unverethert ist,
Ester von Di- und Polyolen, in denen mindestens eine Hydroxylgruppe mit einer ungesättigten Säure verestert und mindestens eine Hydroxylgruppe unverestert ist,
Vinylester, Monoepoxide von Dienen und Trienen,
ungesättigte Halogenide mit 2 bis 20 C-Atomen und einer bis fünf C-C-Doppelbindungen,
isocyanato(meth)acrylate,
ungesättigte halogenierte Silane.
R² gewählt aus C₁-C₁₀-Alkyl, unverzweigt oder verzweigt, C₂-C₆-Alkenyl, COOH und Wasserstoff,
X gewählt aus Halogen und OR³,
R³ gewählt aus C₁-C₁₀-Alkyl, unverzweigt oder verzweigt, C₁-C₁₀-Alkyl, unverzweigt oder verzweigt, mit mindestens einer funktionel- len Gruppe, Polyethylenglykolderivaten, Polypropylenglykolderivaten, Glyidyl, H-CO (Formyl), unverzweigtem oder verzweigtem C₁-C₁₀-Alkyl-CO, C₆-C₁₀-Aryl-CO.

5. Verfahren zur Herstellung von hyperverzweigten Polyestern mit ungesättigten Gruppen nach Anspruch 1 bis 4, **dadurch gekennzeichnet, dass** man mindestens einen hyperverzweigten Polyester synthetisiert durch Kondensation von
a) mindestens einer Dicarbonsäure oder mindestens eines Derivats derselben mit mindestens einem mindestens trifunktionellen Alkohol
oder
b) mindestens einer Tricarbonsäure oder höheren Polycarbonsäure oder mindestens einem Derivat derselben mit mindestens einem Diol,
und danach mit (c) mindestens einer Verbindung mit mindestens einer ethylenisch ungesättigten Doppelbindung umsetzt.

6. Verfahren zur Herstellung von hyperverzweigten Polyestern mit ungesättigten Gruppen nach Anspruch 1 bis 4, **dadurch gekennzeichnet, dass** man mindestens einen hyperverzweigten Polyester durch Kondensation von
a) mindestens einer Dicarbonsäure oder mindestens einem Derivat derselben mit mindestens einem mindestens trifunktionellen Alkohol
oder
b) mindestens einer Tricarbonsäure oder höheren Polycarbonsäure oder mindestens einem Derivat derselben mit mindestens einem Diol,
in Gegenwart von (c) mindestens einer Verbindung mit mindestens einer ethylenisch ungesättigten Doppelbindung synthetisiert.

7. Verwendung von hyperverzweigten Polyestern mit ungesättigten Gruppen nach Anspruch 1 bis 4 als Bindemittel.

8. Verfahren zur Herstellung von strahlungshärtbaren Massen unter Verwendung von hyperverzweigten Polyestern mit ungesättigten Gruppen nach einem der Ansprüche 1 bis 4.

9. Strahlungshärtbare Massen, enthaltend hyperverzweigte Polyester mit ungesättigten Gruppen nach Anspruch 1 bis 4.

## Claims

1. A hyperbranched polyester containing ethylenically unsaturated groups and obtainable by reacting
(c) at least one compound having at least one ethylenic double bond
with at least one hyperbranched polyester obtainable by condensing
(a) at least one dicarboxylic acid or derivative thereof with at least one at least trifunctional alcohol
or
(b) at least one tricarboxylic or higher polycarboxylic acid or derivative thereof with at least one diol.

2. A hyperbranched polyester containing unsaturated groups according to claim 1, wherein at least one compound having at least one ethylenic double bond is a compound having a terminal double bond.

3. A hyperbranched polyester containing unsaturated groups according to claim 1 or 2, wherein at least
one compound having at least one ethylenic double bond is a compound of the formula Ia or Ib 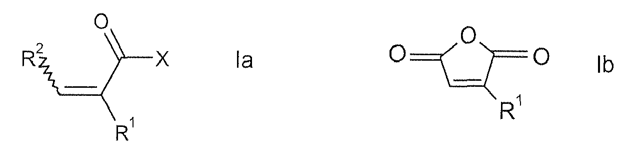 where:
R¹ is selected from C₁-C₁₀ alkyl, unbranched or branched, and hydrogen,
R² is selected from C₁-C₁₀ alkyl, unbranched or branched, C₂-C₆ alkenyl, COOH, and hydrogen,
X is selected from halogen and OR³, and
R³ is selected from C₁-C₁₀ alkyl, unbranched or branched, C₁-C₁₀ alkyl, unbranched or branched, with at least one functional group, polyethylene glycol derivatives, polypropylene glycol derivatives, glycidyl, H-CO (formyl), unbranched or branched C₁-C₁₀ alkyl-CO, and C₆-C₁₀ aryl-CO.

4. A hyperbranched polyester containing unsaturated groups according to claim 1 or 2, wherein at least one compound having at least one ethylenic double bond is selected from
unsaturated carboxylic acids having 3 to 30 carbon atoms and from 1 to 5 C-C double bonds,
unsaturated alcohols having 3 to 40 carbon atoms and from 1 to 5 C-C double bonds,
unsaturated amines having 3 to 20 carbon atoms and from 1 to 5 C-C double bonds,
diol and polyol ethers in which at least one hydroxyl group is etherified with an unsaturated alcohol and at least one hydroxyl group is unetherified,
diol and polyol esters in which at least one hydroxyl group is esterified with an unsaturated acid and at least one hydroxyl group is unesterified,
vinyl esters, diene and triene monoepoxides, unsaturated halides having 2 to 20 carbon atoms and from 1 to 5 C-C double bonds,
isocyanato (meth)acrylates, and
unsaturated halogenated silanes.

5. A process for preparing a hyperbranched polyester containing unsaturated groups according to any one of claims 1 to 4, which comprises synthesizing at least one hyperbranched polyester by condensing
a) at least one dicarboxylic acid or derivative thereof with at least one at least trifunctional alcohol
or
b) at least one tricarboxylic or higher polycarboxylic acid or derivative thereof with at least one diol,
and then reacting the synthesis product with (c) at least one compound having at least one ethylenically unsaturated double bond.

6. A process for preparing a hyperbranched polyester containing unsaturated groups according to any one of claims 1 to 4, which comprises synthesizing at least one hyperbranched polyester by condensing
a) at least one dicarboxylic acid or derivative thereof with at least one at least trifunctional alcohol,
or
b) at least one tricarboxylic or higher polycarboxylic acid or derivative thereof with at least one diol,
in the presence of (c) at least one compound having at least one ethylenically unsaturated double bond.

7. The use of a hyperbranched polyester containing unsaturated groups according to any one of claims 1 to 4 as a binder.

8. A process for preparing a radiation-curable composition using one or more hyperbranched polyesters containing unsaturated groups according to any one of claims 1 to 4.

9. A radiation-curable composition comprising one or more hyperbranched polyesters containing unsaturated groups according to any one of claims 1 to 4.

## Revendications

1. Polyesters hyper-ramifiés comportant des groupes à insaturation éthylénique, pouvant être obtenus par mise en réaction
c) d'au moins un composé comportant au moins une double liaison éthylénique
avec au moins un polyester hyper-ramifié, qui peut être obtenu par condensation
(a) d'au moins un acide dicarboxylique ou d'au moins un dérivé d'un tel acide avec au moins un alcool au moins trifonctionnel
ou
(b) d'au moins un acide tricarboxylique ou acide polycarboxylique à plus haute fonctionnalité ou d'au moins un dérivé d'un tel acide avec au moins un diol.

2. Polyesters hyper-ramifiés à groupes insaturés selon la revendication 1, **caractérisés en ce que** ledit au moins un composé comportant au moins une double liaison éthylénique consiste en un composé comportant une double liaison en bout de chaîne.

3. Polyesters hyper-ramifiés à groupes insaturés selon la revendication 1 ou 2, **caractérisés en ce que** ledit au moins un composé comportant au moins une double liaison éthylénique consiste en un composé de formule générale Ia ou Ib 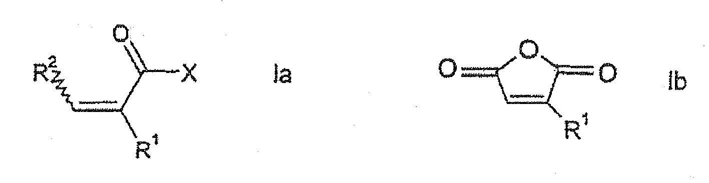 formules dans lesquelles les variables sont définies comme suit :
R¹ est choisi parmi un groupe alkyle en C₁-₁₀, ramifié ou non ramifié, et un atome d'hydrogène,
R² est choisi parmi un groupe alkyle en C₁-C₁₀, ramifié ou non ramifié, alcényle en C₂-C₆, COOH et un atome d'hydrogène,
X est choisi parmi un atome d'halogène et OR³,
R³ est choisi parmi un groupe alkyle en C₁-C₁₀, ramifié ou non ramifié, un groupe alkyle en C₁-C₁₀, ramifié ou non ramifié, comportant au moins un groupe fonctionnel, des dérivés de polyéthylèneglycol, des dérivés de polypropylèneglycol, le groupe glycidyle, H-CO (formyle), un groupe alkyl(C₁-C₁₀)-CO ramifié ou non ramifié, aryl(C₆-C₁₀)-CO.

4. Polyesters hyper-ramifiés à groupes insaturés selon la revendication 1 ou 2, **caractérisés en ce qu'**au moins un composé comportant au moins une double liaison éthylénique est choisi parmi
des acides carboxyliques insaturés comportant de 3 à 30 atomes de carbone et une à cinq doubles liaisons C-C,
des alcools insaturés comportant de 3 à 40 atomes de carbone et une à cinq doubles liaisons C-C,
des amines insaturées comportant de 3 à 20 atomes de carbone et une à cinq doubles liaisons C-C,
des éthers de diols et polyols, dans lesquels au moins un groupe hydroxy est éthérifié par un alcool insaturé et au moins un groupe hydroxy est non éthérifié,
des esters de diols et polyols, dans lesquels au moins un groupe hydroxy est estérifié par un acide insaturé et au moins un groupe hydroxy est non estérifié,
des esters vinyliques, des monoépoxydes de diènes et triènes,
des halogénures insaturés comportant de 2 à 20 atomes de carbone et une à cinq doubles liaisons C-C,
des isocyanato(méth)acrylates,
des silanes halogénés insaturés.

5. Procédé pour la préparation de polyesters hyper-ramifiés à groupes insaturés selon l'une quelconque des revendications 1 à 4, **caractérisé en ce qu'**on synthétise au moins un polyester hyper-ramifié par condensation
a) d'au moins un acide dicarboxylique ou d'au moins un dérivé d'un tel acide avec au moins un alcool au moins trifonctionnel
ou
b) d'au moins un acide tricarboxylique ou acide polycarboxylique à plus haute fonctionnalité ou d'au moins un dérivé d'un tel acide avec au moins un diol,
et ensuite mise en réaction avec (c) au moins un composé comportant au moins une double liaison à insaturation éthylénique.

6. Procédé pour la préparation de polyesters hyper-ramifiés à groupes insaturés selon l'une quelconque des revendications 1 à 4, **caractérisé en ce qu'**on synthétise au moins un polyester hyper-ramifié par condensation
a) d'au moins un acide dicarboxylique ou d'au moins un dérivé d'un tel acide avec au moins un alcool au moins trifonctionnel
ou
b) d'au moins un acide tricarboxylique ou acide polycarboxylique à plus haute fonctionnalité ou d'au moins un dérivé d'un tel acide avec au moins un diol,
en présence de (c) au moins un composé comportant au moins une double liaison à insaturation éthylénique.

7. Utilisation de polyesters hyper-ramifiés à groupes insaturés selon l'une quelconque des revendications 1 à 4, en tant que liant.

8. Procédé pour la production de matières durcissables par irradiation, avec utilisation de polyesters hyper-ramifiés à groupes insaturés selon l'une quelconque des revendications 1 à 4.

9. Matières durcissables par irradiation, contenant des polyesters hyper-ramifiés à groupes insaturés selon l'une quelconque des revendications 1 à 4.
